# EUROPÄISCHE PATENTSCHRIFT

(11) **EP 2 601 446 B1**
(45) Veröffentlichungstag und Bekanntmachung des Hinweises auf die Patenterteilung: **10.02.2016**
(21) Anmeldenummer: 11741159.5
(22) Anmeldetag: 19.07.2011
(51) Int. Cl.: F23N 1/00

(54) **GASVENTILEINHEIT**
GAS VALVE UNIT
GROUPE DE VALVES À GAZ

(30) Priorität: 06.08.2010 DE 102010039009
(43) Veröffentlichungstag der Anmeldung: 12.06.2013
(73) Patentinhaber: BSH Hausgeräte GmbH, 81739 München (DE)
(72) Erfinder: NAUMANN, Jörn, 77770 Durbach (DE)
(86) Internationale Anmeldenummer: PCT/EP2011/062354
(87) Internationale Veröffentlichungsnummer: WO 2012/016823

(56) Entgegenhaltungen:
- EP-A2- 0 818 655
- WO-A1-99/11956
- WO-A2-2011/144492
- DE-A1- 10 249 936
- DE-T2- 3 874 296

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile aufweist.

Gasventileinheiten der genannten Art sind beispielweise in den Druckschriften EP0818655A2 und WO2004063629 A1 beschrieben. Mit derartigen Gasventileinheiten kann der einen Gasbrenner eines Gaskochgeräts zugeführte Gasvolumenstrom in mehreren Stufen gesteuert werden. Dabei besitzt der Gasvolumenstrom in jeder Stufe eine reproduzierbare Größe. Der Durchflussquerschnitt der Gasventileinheit insgesamt und folglich die Größe des Gasvolumenstroms werden eingestellt, indem bestimmte Auf-Zu-Ventile der Gasventileinheit geöffnet bzw. geschlossen werden und dadurch der Gasfluss durch bestimmte Drosselöffnungen freigegeben bzw. unterbrochen wird.

Bei den bekannten gattungsmäßigen Gasventileinheiten werden die Auf-Zu-Ventile einzeln elektromagnetisch betätigt. Hierzu ist jedem der Auf-Zu-Ventile ein eigener Elektromagnet zugeordnet, der das Auf-Zu-Ventil öffnet bzw. schließt. Die Ansteuerung der Elektromagnete erfolgt durch eine elektronische Steuereinheit. Diese elektronische Steuereinheit verarbeitet die von einer Bedienperson des Gaskochgeräts mittels eines elektrischen Bedienelements erzeugten Signale und steuert die Elektromagnete der AufZu-Ventile entsprechend an.

Die WO 99/11956 A1 beschreibt eine Gasventileinheit mit mehreren Auf-Zu-Ventilen, die mechanisch mit einem linear verschieblichen Schieber gekoppelt sind. Durch Verlagern des Schiebers sind die Auf-Zu-Ventile additiv zuschaltbar.

Die DE 102 49 936 A1 beschreibt eine Ventilanordnung für die Mikrosystemtechnik. Die Ventilanordnung weist mehrere Auf-Zu-Ventile auf. Die Auf-Zu-Ventile sind mit Hilfe von Permanentmagneten ansteuerbar.

Der vorliegenden Erfindung liegt die Aufgabe zugrunde, eine einfacher gestaltete Gasventileinheit der eingangs genannten Art zur Verfügung zu stellen.

Diese Aufgabe wird erfindungsgemäß durch die Mekmale des unabhängigen Anspruchs 1 gelöst.

In der bevorzugten Ausführungsform sind die beiden magnetisch wirksamen Körper von Permanentmagneten gebildet, welche relativ zu den Auf-Zu-Ventilen bewegbar sind.

Gemäß einer anderen Ausführungsform ist es ebenfalls möglich, als jeweiligen magnetisch wirksamen Körper einen selbst nicht-magnetisch wirksamen Körper aus ferromagnetischem Material vorzusehen. Permanentmagnete sind dann im jeweiligen Bereich der Auf-Zu-Ventile vorgesehen, deren magnetische Anziehungskraft dann abhängig von der Position des jeweiligen magnetisch wirksamen Körpers zwischen dem magnetisch wirksamen Körper und dem jeweiligen Permanentmagnet wirkt.

Die Betätigung der Gasventileinheit erfolgt, indem die Lage oder die räumliche Ausrichtung der magnetisch wirksamen Körper, insbesondere der Permanentmagnets, relativ zu den zu betätigenden Auf-Zu-Ventilen verändert wird. Im Folgenden steht der Begriff "Permanentmagnet" stellvertretend auch für andere magnetisch wirksame Körper. Wenn die Bewegung der Permanentmagnets durch eine Bedienperson von Hand erfolgt, sind zum Schalten der Auf-Zu-Ventile keine elektrischen Komponenten erforderlich. Alternativ können die Permanentmagnets auch mittels eines beliebigen Stellglieds, beispielsweise eines Elektromotors, bewegt werden. Der Elektromotor wird dabei von einer elektrischen Steuereinheit angesteuert. Diese ermöglicht es, dieselbe Gasventileinheit wahlweise mechanisch durch die Bedienperson oder mittels eines elektrischen Stellglieds zu betätigen. Bei der Herstellung von Kochgeräten können baugleiche Gasventileinheiten sowohl mit mechanischen Benutzerschnittstellen, beispielsweise Drehknebeln, als auch mit elektrischen Benutzerschnittstellen, beispielsweise Touch-Sensoren, kombiniert werden.

Die Gasventileinheit ist insbesondere Teil eines handbetätigten Mehrfachstellgeräts, welches aus einem Ventilteil und einer adaptierten Zündsicherung besteht. In dem Ventilteil sind insbesondere ein Griff oder Drehknebel, Permanentmagnete, Ventile, Düsen und Dichtungen integriert. Der Griff kann durch leichten Druck eingedrückt werden. Hierbei wird die Zündsicherung betätigt. Die Auf-Zu-Ventile oder Ferritventile werden in einem oder mehreren gasdichten Räumen durch ein bzw. mehrere federnde Bauteile auf Dichtungen gedrückt und verhindern somit den Durchfluss zu den dazugehörenden Öffnungen oder Dichtungsöffnungen. Die federnden Bauteile oder Federn finden ihren Gegenhalt in einem gasdicht angebrachten Deckel.

Zwischen der Unterseite des Deckels und der Oberkante der Auf-Zu-Ventile ist ein kleiner Spalt im geschlossenen Zustand der Ventile. Oberhalb des Deckels sind die Permanentmagnete positioniert, wobei die Anordnungsabstände von den Auf-Zu-Ventilen und von den Permanentmagnets bevorzugt gleich sind. Die Permanentmagnete werden vom Griff insbesondere mittels eines drehbaren Bauteils verschoben, so dass dadurch eine Ventilbeeinflussung erfolgt.

Die zwei vorzugsweise als Permanentmagnet ausgeführten magnetisch wirksamen Körper und die Auf-Zu-Ventile sind derart ausgeführt, dass in Abhängigkeit von den Positionen der magnetisch wirksamen Körper entweder kein Auf-Zu-Ventil oder genau ein Auf-Zu-Ventil oder genau zwei Auf-Zu-Ventile geöffnet sind. Die Größe des jeweiligen Permanentmagnets und die möglichen Positionen des Permanentmagnets sind derart ausgelegt, dass der jeweilige Permanentmagnet höchstens ein Auf-Zu-Ventil zu einem Zeitpunkt öffnen kann. In der Nullposition des drehbaren Bauteils ist kein Permanentmagnet über einem Auf-Zu-Ventil angeordnet.

Die zwei magnetisch wirksamen Körper sind in Abhängigkeit eines Winkels des drehbaren Bauteils über den in einer Reihe angeordneten Auf-Zu-Ventilen angeordnet.

Ein erster magnetisch wirksamer Körper ist bei einem ersten Winkel des drehbaren Bauteils über dem ersten Auf-Zu-Ventil der Reihe der Auf-Zu-Ventile angeordnet. Der zweite magnetisch wirksame Körper ist bei diesem Winkel über keinem der Auf-Zu-Ventile angeordnet.' Diese Anordnung stellt die Bereitstellung einer Grundlast des Gasvolumenstroms dar.

Wird das drehbare Bauteil weiter gedreht, so dass der resultierende Winkel größer ist als der erste Winkel, so wird bei Erreichen eines zweiten Winkels der zweite magnetisch wirksame Körper über dem ersten Auf-Zu-Ventil angeordnet und verbleibt auch bei weiterem Drehen des drehbaren Bauteils über diesem. Der erste magnetisch wirksame Körper hingegen wird in Abhängigkeit des größer werdenden Winkels des drehbaren Bauteils über die auf das erste Auf-Zu-Ventil folgenden Auf-Zu-Ventile geführt. Folglich kann der zweite magnetisch wirksame Körper in Zusammenwirken mit dem ersten Auf-Zu-Ventil eine Grundlast des Gasvolumenstromes bereitstellen. Der erste magnetisch wirksame Körper kann in diesem Fall in Zusammenwirken mit den weiteren Auf-Zu-Ventilen eine jeweilige Zusatzlast des Gasvolumenstromes bereitstellen, je nachdem über welchem Auf-Zu-Ventil sich der magnetisch wirksame Körper befindet.

Folgendes Beispiel mit fünf Auf-Zu-Ventilen und der Annahme, dass der (i+1)-te Winkel größer als der i-te Winkel ist, kann dies verdeutlichen. Bei einem ersten Winkel des drehbaren Bauteils ist der erste Permanentmagnet über dem ersten Auf-Zu-Ventil. Folglich wird eine Grundlast bereitgestellt.

Bei einem zweiten Winkel des drehbaren Bauteils ist der erste Permanentmagnet über dem zweiten Auf-Zu-Ventil und der zweite Permanentmagnet ist über dem ersten Auf-Zu-Ventil. Bei einem dritten Winkel des drehbaren Bauteils sind der erste Permanentmagnet über dem dritten Auf-Zu-Ventil und der zweite Permanentmagnet über dem ersten Auf-Zu-Ventil. Folglich werden eine Grundlast mittels des ersten Auf-Zu-Ventils und eine Zusatzlast mittels des dritten Auf-Zu-Ventils bereitgestellt.

Bei einem vierten Winkel des drehbaren Bauteils sind der erste Permanentmagnet über dem vierten Auf-Zu-Ventil und der zweite Permanentmagnet über dem ersten Auf-Zu-Ventil. Analog sind bei einem fünften Winkel des drehbaren Bauteils der erste Permanentmagnet über dem fünften Auf-Zu-Ventil und der zweite Permanentmagnet über dem ersten Auf-Zu-Ventil.

Bevorzugt ist - wie oben ausgeführt - eine Mehrzahl N von Auf-Zu-Ventilen vorgesehen, wobei jedes Auf-Zu-Ventil einen bewegbaren Absperrkörper aufweist, der bei geschlossenem Auf-Zu-Ventil an einem Ventilsitz anliegt und dadurch eine Öffnung oder Ventilöffnung im Ventilsitz verschließt. Insbesondere haben die Öffnungen unterschiedliche Durchmesser. Bevorzugt haben die zweite bis n-te Öffnung ansteigende Durchmesser. Somit kann die zugeschaltete Zusatzlast je nach Drehwinkel vergrößert werden.

Wie oben bereits ausgeführt, weist jedes Auf-Zu-Ventil einen bewegbaren Absperrkörper auf, welcher bei geschlossenem Auf-Zu-Ventil an einem Ventilsitz anliegt und dadurch eine Öffnung im Ventilsitz verschließt. Bei geöffnetem Auf-Zu-Ventil wird die Öffnung im Ventilsitz von Gas durchströmt. Dieser Gasfluss wird unterbrochen, wenn der Absperrkörper des jeweiligen Auf-Zu-Ventils an dem Ventilsitz anliegt.

Vorzugsweise ist der Ventilsitz als im Wesentlichen ebene Fläche ausgeführt. Die ebene Fläche des Ventilsitzes bildet die Dichtfläche gegenüber dem jeweiligen Absperrkörper. Der in diesem Fall mit einer erhabenen Dichtkante ausgeführt ist. Zur Herstellung des Ventilsitzes an sich sind damit keine mechanischen Bearbeitungsschritte erforderlich, wenn zur Herstellung des Ventilsitzes ein Plattenmaterial verwendet wird. In die ebene Fläche müssen dann nur die Öffnungen eingearbeitet werden. Alternativ kann der Ventilsitz als Formdichtung ausgebildet sein, wobei der Absperrkörper dann an seiner Dichtfläche plan ausgebildet ist. Der Vorteil dieser Variante ist, dass die Gefahr einer Beschädigung der Dichtkante am Absperrkörper verringert ist.

Mit besonderem Vorteil sind die Ventilsitze der mindestens zwei Auf-Zu-Ventile von einem gemeinsamen Bauteil gebildet. Dieses gemeinsame Bauteil kann als Ventildichtplatte ausgeführt sein und besitzt für jedes Auf-Zu-Ventil eine Öffnung oder Ventilöffnung und einen der Öffnung zugeordneten Ventilsitz. Insbesondere weist jedes Auf-Zu-Ventil eine Feder auf, die bei geschlossenem Auf-Zu-Ventil den Absperrkörper auf den Ventilsitz drückt. Die Feder erzeugt somit die Schließkraft des Auf-Zu-Ventils. Die Feder stellt damit sicher, dass unabhängig von der Einbaulage der Gasventileinheit, z.B. auch dann, wenn die Gewichtskraft des Absperrkörpers der Kraft der Feder entgegenwirkt, das Auf-Zu-Ventil sicher schließt.

Zum Öffnen des Auf-Zu-Ventils ist der Absperrkörper mittels der Kraft des Permanentmagnets entgegen der Kraft der Feder von dem Ventilsitz abhebbar. Jedes Auf-Zu-Ventil kann somit mittels zumindest eines Permanentmagnets aktiv geöffnet werden. Der Absperrkörper ist aus einem ferromagnetischen Material ausgebildet und wird zum Öffnen eines Auf-Zu-Ventils von dem entsprechenden Permanentmagnets angezogen. Wenn der jeweilige Permanentmagnet von dem Absperrkörper wegbewegt wird oder wenn der Permanentmagnet vollständig von der Gasventileinheit entfernt wird, schließt jedes einzelne Auf-Zu-Ventil in Folge der Kraft der Feder, welche den Absperrkörper auf den Ventilsitz drückt, automatisch.

Auch ist es möglich, den Absperrkörper des Auf-Zu-Ventils als Permanentmagnets auszuführen. Die Betätigung kann dadurch erfolgen, dass ein nicht-magnetischer ferromagnetischer Körper relativ zu dem Absperrkörper bewegt wird. Alternativ können auch sowohl der Absperrkörper als auch der relativ zu dem Absperrkörper bewegbare Körper als Permanentmagnet ausgeführt sein. In diesem Fall kann wahlweise die Anziehungskraft oder die Abstoßkraft der Permanentmagnete zur Betätigung der Auf-Zu-Ventile genutzt werden.

Bevorzugt ist jeder Absperrkörper von einem im Wesentlichen zylindrischen Stößel gebildet. Der Absperrkörper weist an seinem dem Ventilsitz zugewandten Ende vorzugsweise eine ringförmige Dichtkante auf.

Jeder Absperrkörper ist in einem Ventilkörper der Gasventileinheit axial bewegbar geführt.

Eine besonders günstige Anordnung ist gegeben, wenn die Absperrkörper der einzelnen Auf-Zu-Ventile auf einer Kreisbahn um eine Achse der Gasventileinheit angeordnet sind und die Absperrkörper parallel zu dieser Achse bewegbar sind. Es entsteht hierdurch eine ringförmige Anordnung, bei der auch die Öffnungen der Ventildichtplatte auf einer Kreisbahn angeordnet sind. Die Bewegung der Absperrkörper erfolgt senkrecht zu der Ebene der Ventildichtplatte.

Zur Betätigung des jeweiligen Auf-Zu-Ventils ist die Position der Permanentmagnets relativ zu dem Absperrkörper des jeweiligen Auf-Zu-Ventils veränderbar. Der Absperrkörper wird von dem jeweiligen Permanentmagnets dann angezogen, wenn sich der Absperrkörper direkt unterhalb des jeweiligen Permanentmagnets befindet. Andernfalls ist das Auf-Zu-Ventil mittels der auf den Absperrkörper wirkenden Kraft der Feder geschlossen.

Eine besonders zweckmäßige Ausgestaltung der Erfindung sieht vor, dass die beiden vorzugsweise als Permanentmagnets gebildeten magnetisch wirksamen Körper an einem um die Achse der Gasventileinheit drehbaren Bauteil der Gasventileinheit angeordnet sind, wobei die Achse vorzugsweise von einer Schaltwelle der Gasventileinheit gebildet ist. Bei einem Drehen des drehbaren Bauteils werden die Permanentmagnets auf einer Kreisbahn bewegt. Dabei wird allerdings der zweite, dem ersten Permanentmagnets nachfolgende Permanentmagnet nur bis zur Position über dem ersten Auf-Zu-Ventil bewegt. Der Durchmesser der Kreisbahn entspricht im Wesentlichen dem Durchmesser der Kreisbahn, in der sich die Absperrkörper befinden. Dies bedeutet, dass bei einem Drehen des drehbaren Bauteils der erste Permanentmagnet über die Absperrkörper aller Auf-Zu-Ventile bewegt werden kann.

Eine besonders einfache Anordnung sieht vor, dass das drehbare Bauteil durch eine Bedienperson von Hand um die Achse drehbar ist. Dann sind keinerlei elektrische oder elektronische Bauteile erforderlich. Die Betätigung der Gasventileinheit erfolgt ausschließlich durch die manuelle Kraft der Bedienperson, welche die Permanentmagnets relativ zu den Absperrkörpern der Auf-Zu-Ventile bewegen kann.

Ebenfalls ist es möglich, dass das drehbare Bauteil mittels eines elektrischen Stellglieds um die Achse drehbar ist. Für das elektrische Stellglied kommt insbesondere ein Elektromotor, beispielsweise ein Schrittmotor, zum Einsatz. Das Stellglied wird dabei von einer elektrischen Steuereinheit angesteuert, beispielsweise in Abhängigkeit von den Signalen einer elektrischen Benutzerschnittstelle oder in Abhängigkeit von automatisierten Funktionen, beispielsweise einer automatisierten Leistungsregulierung oder einer Abschaltautomatik.

Weitere Vorteile und Einzelheiten der Erfindung werden anhand der in den schematischen Figuren dargestellten Ausführungsbeispiele näher erläutert. Dabei zeigt:
- Fig. 1: eine schematische Schaltanordnung der Gasventileinheit mit geschlossenen Auf-Zu-Ventilen,
- Fig. 2: eine schematische Schaltanordnung der Gasventileinheit mit einem mittels eines ersten Permanentmagnets geöffneten ersten Auf-Zu-Ventil,
- Fig. 3: eine schematische Schaltanordnung der Gasventileinheit mit einem mittels eines zweiten Permanentmagnets geöffneten ersten Auf-Zu-Ventil,
- Fig. 4: eine schematische Schaltanordnung der Gasventileinheit mit einem geöffneten ersten Auf-Zu-Ventil und einem geöffneten zweiten Auf-Zu-Ventil,
- Fig. 5: eine schematische Schaltanordnung der Gasventileinheit mit einem mittels des zweiten Permanentmagnets geöffneten ersten Auf-Zu-Ventil, und
- Fig. 6: eine schematische Schaltanordnung der Gasventileinheit mit einem geöffneten ersten Auf-Zu-Ventil und einem geöffneten dritten Auf-Zu-Ventil.

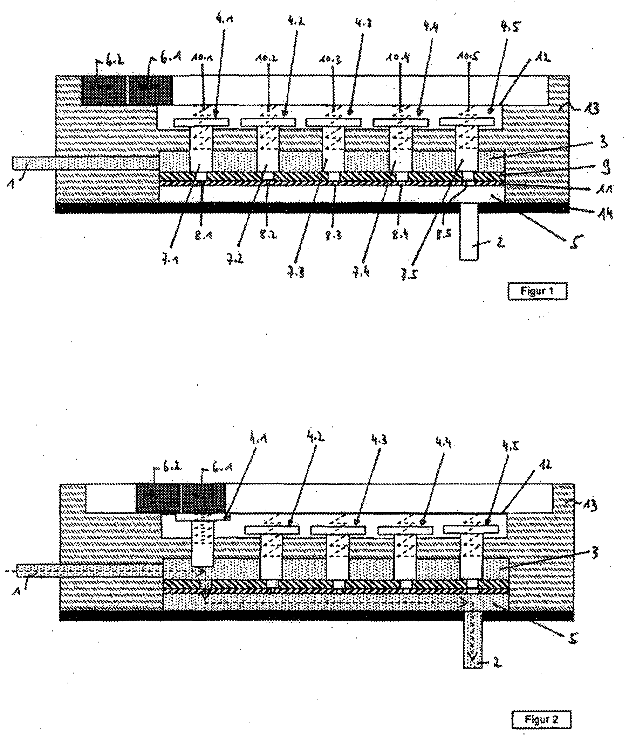

Die Fig. 1 bis 6 zeigen die Schaltanordnung der erfindungsgemäßen Gasventileinheit in aufeinanderfolgenden Schaltzuständen. Zu erkennen ist ein Gaseingang 1, mit dem die Gasventileinheit beispielsweise an eine Hauptgasleitung eines Gaskochgeräts angeschlossen ist. An dem Gaseingang 1 steht das zur Verbrennung vorgesehene Gas mit einem konstanten Druck, von beispielsweise 20 mbar oder 50 mbar. An einem Gasausgang 2 der Gasventileinheit wird eine beispielsweise zu einem Gasbrenner des Gaskochgeräts führende Gasleitung angeschlossen. Der Gaseingang 1 ist über einen Gaseingangsraum 3 der Gasventileinheit mit der Eingangsseite der im vorliegenden Ausführungsbeispiel fünf Auf-Zu-Ventilen 4 (4.1 bis 4.5) verbunden. Durch Öffnen der Auf-Zu-Ventile 4 ist der Gaseingang 1 jeweils mit dem Gasausgangsraum 5 verbunden. Zwischen dem Gaseingangsraum 3 und dem Gasausgangsraum 5 ist eine Dichtplatte oder Ventildichtplatte 9 angeordnet.

Die Auf-Zu-Ventile 4 sind durch Bewegen von zwei Permanentmagnets 6 (6.1, 6.2) relativ zu den Auf-Zu-Ventilen 4 betätigbar.

Dabei sind die zwei Permanentmagnets 6 und die Auf-Zu-Ventile 4 derart ausgeführt, dass in Abhängigkeit von den Positionen der Permanentmagnets 6 entweder kein Auf-Zu-Ventil 4 oder genau ein Auf-Zu-Ventil 4 oder genau zwei Auf Zu-Ventile 4 geöffnet ist.

Hierzu ist im jeweiligen Auf-Zu-Ventil 4.1 bis 4.5 eine Öffnung 8.1 bis 8.5 in einer Düsenplatte 11 zugeordnet. Bei geöffnetem Auf-Zu-Ventil 4.1 bis 4.5 kann Gas von dem Gaseingangsraum 3 zu dem Gasausgangsraum 5 gelangen.

Die Ventilsitze der Auf-Zu-Ventile 4.1 bis 4.5 sind vorzugsweise von einem gemeinsamen Bauteil gebildet. Dieses gemeinsame Bauteil ist beispielsweise die Ventildichtplatte 9.

Jedes Auf-Zu-Ventil 4.1 bis 4.5 hat eine Feder 10.1 bis 10.5, welche bei geschlossenem Auf-Zu-Ventil 4.1 bis 4.5 einen Absperrkörper 7 (7.1-7.5) auf den Ventilsitz drückt. Der bewegbare Absperrkörper 7 liegt bei geschlossenem Auf-Zu-Ventil 4 an dem Ventilsitz an und verschließt dadurch die Öffnung 8 in der Düsenplatte 11.

Zum Öffnen des Auf-Zu-Ventils 4 hebt der Absperrkörper 7 mittels der Kraft des Permanentmagnets 6 entgegen der Kraft der Feder von dem Ventilsitz ab. Der Absperrkörper 7 ist beispielsweise von einem im Wesentlichen zylindrischen Stößel gebildet.

Die Absperrkörper 7.1 bis 7.5 der Auf-Zu-Ventile 4.1 bis 4.5 sind auf einer Kreisbahn um eine Achse der Gasventileinheit angeordnet. Die Absperrkörper 7 sind parallel zu dieser Achse bewegbar.

Zur Betätigung der Auf-Zu-Ventile 4.1 bis 4.5 sind die Positionen der Permanentmagnets 6.1, 6.2 relativ zu den Absperrkörpern 7.1 bis 7.5 der Auf Zu-Ventile 4.1 bis 4.5 veränderbar. Insbesondere sind dabei die zwei Permanentmagnets 6.1, 6.2 in Abhängigkeit eines Winkels eines drehbaren Bauteils über den in einer Reihe angeordneten Auf-Zu-Ventilen 4.1 bis 4.5 angeordnet.

In der Schaltstellung gemäß Fig. 1 ist keines der Auf-Zu-Ventile 4.1 bis 4.5 geöffnet. Somit kann kein Gas von dem Gaseingangsraum 3 zu dem Gasausgangsraum 5 strömen. Alle Auf-Zu-Ventile 4.1 bis 4.5 dichten auf der Dichtplatte 9 ab.

Wenn die Permanentmagnete 6.1, 6.2 aus der Nullposition verschoben werden, nähern sie sich dem ersten Auf-Zu-Ventil 4.1 an und bewirken dort durch die Anziehungskraft des ersten Permanentmagnets 6.1, dass das erste Auf-Zu-Ventil 4.1 gegen den Deckel 12 gezogen wird. Folglich öffnet das erste Auf-Zu-Ventil 4.1. Damit ist der erste Permanentmagnet 6.1 bei einem ersten Winkel des drehbaren Bauteils, der die Verschiebung der Permanentmagnete 6.1, 6.2 bewirkt, über dem ersten Auf-Zu-Ventil 4.1 der Reihe der Auf-Zu-Ventile 4.1 bis 4.5 angeordnet. Der zweite Permanentmagnet 6.2 ist hingegen über keinem der Auf-Zu-Ventile 4.1 bis 4.5 angeordnet und leistet damit keine Öffnungsfunktion.

Durch die Öffnung des ersten Auf-Zu-Ventils 4.1 kann Gas durch die Öffnung in der Dichtplatte 9 und dann durch die Öffnung 8.1 in der darunterliegenden Düsenplatte 11 strömen. Die Düsenplatte 11 fungiert insbesondere als Gegenlager für die Auf-Zu-Ventile 4.1 bis 4.5.

In der Schaltstellung gemäß der Fig. 2 strömt die kleinste mögliche Menge an Gas, die so genannte Grundlast, von dem Gaseingangsraum 3 in den Gasausgangsraum 5.

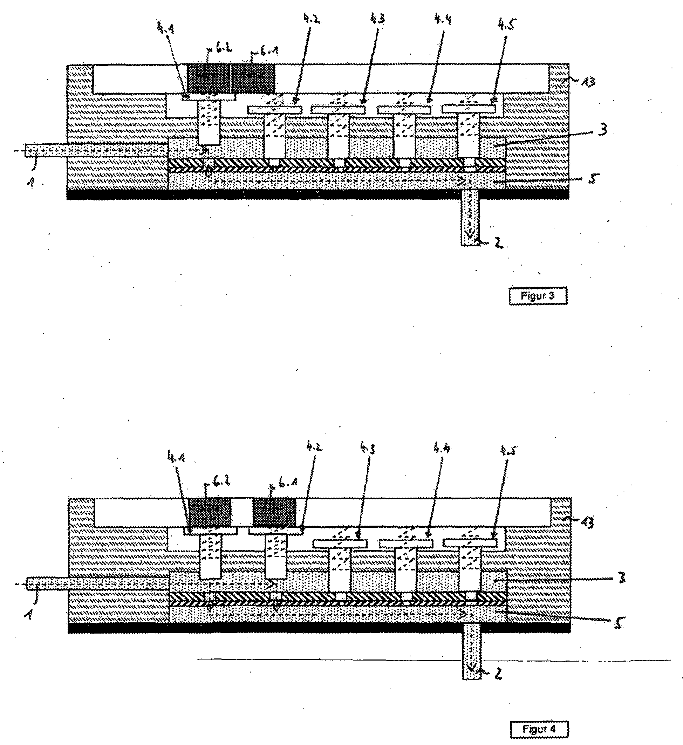

In den folgenden Schaltanordnungen der Fig. 3 bis 6 wird das Auf-Zu-Ventil 4.1 stetig geöffnet bleiben, so dass durch die Öffnung 8.1 durchtretendes Gas am Gasausgang 2 stets als Grundlast bereitgestellt ist. Das Öffnen des ersten Auf-Zu-Ventils 4.1 wird gemäß den Fig. 3 bis 6 von dem zweiten Permanentmagnets 6.2 übernommen. Der erste Permanentmagnet 6.1 wird in Abhängigkeit eines größer werdenden Winkels des drehbaren Bauteils über die auf das erste Auf-Zu-Ventil 4.1 folgenden Auf-Zu-Ventile 4.2-4.5 geführt. Somit ist der erste Permanentmagnet 6.1 dazu eingerichtet, in Zusammenwirken mit den weiteren Auf-Zu-Ventilen 4.2 bis 4.5 eine jeweilige Zusatzlast des Gasstromes zu der Grundlast bereitzustellen. Hierzu im Detail:
Mit Bezug zu Fig. 3 werden der erste Permanentmagnet 6.1 und der zweite Permanentmagnet 6.2 weiter in Richtung des zweiten Auf-Zu-Ventils 4.2 verschoben, bis der zweite Permanentmagnet 6.2 direkt über dem ersten Auf-Zu-Ventil 4.1 steht. Wie oben bereits ausgeführt, wird der zweite Permanentmagnet 6.2 bei den folgenden Schaltvorgängen der Fig. 4 bis 6 nicht weiter verschoben. Gemäß der Fig. 2 ist der erste Permanentmagnet 6.1 noch nicht über dem zweiten Auf-Zu-Ventil 4.2 angeordnet, so dass das zweite Auf-Zu-Ventil 4.2 noch geschlossen ist.
Mit Bezug zu Fig. 4 wird nur der erste Permanentmagnet 6.1 weiter in Richtung des zweiten Auf-Zu-Ventils 4.2 verschoben, bis dieses öffnet.

In dieser Schaltstellung strömt durch das erste Auf-Zu-Ventil 4.1 die Grundlast. Eine weitere Gasmenge strömt durch das zweite Auf-Zu-Ventil 4.2 in den Gasausgangsraum 5.

Die Öffnungen 8 (8.1 bis 8.5) haben insbesondere zumindest zwei unterschiedliche Durchmesser. Bevorzugt hat die zweite bis fünfte Öffnung 8.2 bis 8.5 einen der Reihe nach zunehmenden Öffnungsquerschnitt. Somit wird durch Weiterdrehen des drehbaren Bauteils die Zusatzlast sukzessive erhöht.

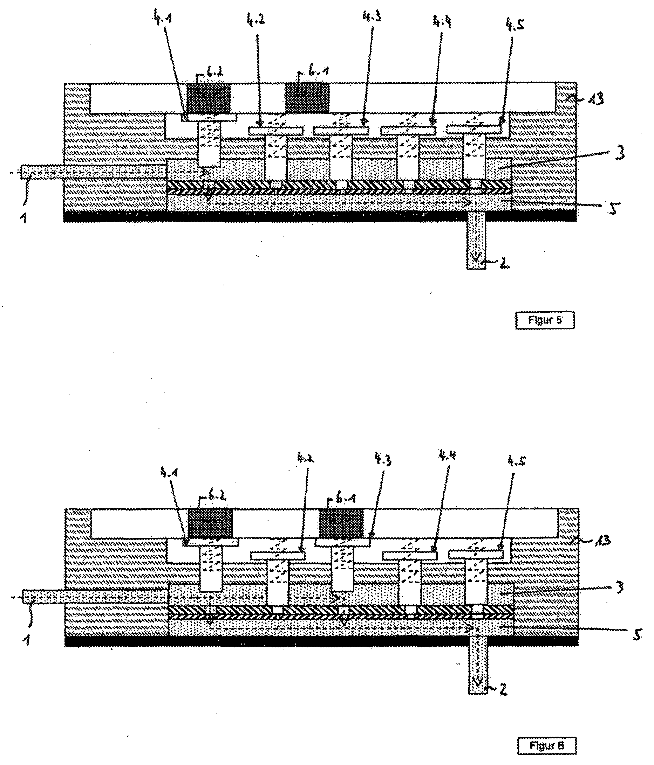

Mit Bezug zu Fig. 5 wird der erste Permanentmagnet 6.1 weiter in Richtung des dritten Auf-Zu-Ventils 4.3 verschoben. Bevor das dritte Auf-Zu-Ventil 4.3 öffnet, schließt das zweite Auf-Zu-Ventil 2. In diesem Augenblick kann nur die Grundlast mittels des ersten Auf-Zu-Ventils 4.1 von dem Gaseingangsraum 3 in den Gasausgangsraum 5 strömen.

Wenn der erste Permanentmagnet 6.1 allerdings in hinreichender Nähe zu dem dritten Auf-Zu-Ventil 3 ist, öffnet dieses (siehe Fig. 6). Durch das geöffnete Auf-Zu-Ventil 4.3 und durch die folgende Öffnung 8.3 strömt jetzt ein veränderter Gasmengenanteil gegenüber der Fig. 4 in den Gasausgangsraum 5 und dann weiter in Richtung des Gasausgangs 2. Dieser veränderte Gasmengenanteil ist insbesondere durch die unterschiedlichen Öffnungsquerschnitte der Öffnungen 8.2 und 8.3 bewirkt.

Obige Schaltanordnung der Gasventileinheit der Fig. 1 bis 6 zeigt, dass in den einzelnen Schaltstufen variierende Gasmengen gegenüber der Grundlast erreicht werden. In Abhängigkeit der Ausgestaltung der Öffnungsquerschnitte ist auch eine stetig ansteigende Gasmenge gegenüber der Grundlast darstellbar. Des Weiteren ist selbst ein Zickzackprofil für die bereitgestellte Gasmenge möglich.

Die obigen Schaltzustände der Fig. 1 bis 6 sind vorteilhafterweise exakt reproduzierbar. Ferner ist auch der Aufbau der Auf-Zu-Ventile ab der Dichtplatte in Strömungsrichtung gesehen sehr einfach, da eine Doppellochung der Düsenplatte und weitere Gasverteilungsplatten entfallen können. Die magnetische Justierung mittels der zwei Permanentmagnets wirkt für die Bedienperson wie Rasten. Somit hat die Bedienperson ein haptisches Feedback. Des Weiteren ist die Haptik auch leicht gleitend aufgrund des Einsatzes der Permanentmagnets. Folglich ist auch bei den Schaltvorgängen der Auf-Zu-Ventile kein Fett erforderlich, so dass es zu keiner Verschiebung der Schaltpunkte kommen kann. Auch gibt es keinen reibenden Verlust an den Auf-Zu-Ventilen wie bei einem herkömmlichen Ventil mit Konus und Gehäuse. Durch die erfindungsgemäße Anordnung ist ein Drehweg von ca. 320° bereitgestellt. Der Ventilblock kann als Ring oder auch als Schieber ausgebildet werden. Die vorliegende Gasventileinheit ist für jede Gasart, auch für Flüssiggas, einsetzbar.

### Bezugszeichenliste

- 1: Gaseingang
- 2: Gasausgang
- 3: Gaseingangsraum
- 4: Auf-Zu-Ventil
- 5: Gasausgangsraum
- 6: Permanentmagnet
- 7: Absperrkörper
- 8: Öffnung
- 9: Ventildichtplatte
- 10: Feder
- 11: Düsenplatte
- 12: Deckel
- 13: Gehäuse
- 14: Bodenplatte

## Patentansprüche

1. Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile (4) und zwei magnetisch wirksame Körper aufweist, wobei die mindestens zwei Auf-Zu-Ventile (4) durch Bewegen der zwei magnetisch wirksamen Körper relativ zu den Auf-Zu-Ventilen (4) betätigbar sind, wobei die magnetisch wirksamen Körper und die Auf-Zu-Ventile (4) derart ausgeführt sind, dass in Abhängigkeit von den Positionen der magnetisch wirksamen Körper entweder kein Auf-Zu-Ventil (4) oder genau ein Auf-Zu-Ventil (4) oder genau zwei Auf-Zu-Ventile (4) geöffnet sind, wobei die zwei magnetisch wirksamen Körper (6) in Abhängigkeit eines Winkels eines drehbaren Bauteils über den in einer Reihe angeordneten Auf-Zu-Ventilen (4) angeordnet sind, wobei ein erster magnetisch wirksamer Körper (6) bei einem ersten Winkel des drehbaren Bauteils über dem ersten Auf-Zu-Ventil (4.1) der Reihe der Auf-Zu-Ventile (4.1 bis 4.5) angeordnet ist und wobei ein zweiter magnetisch wirksamer Körper (6.2) ab einem zweiten Winkel, der größer als der erste Winkel ist, über dem ersten Auf-Zu-Ventil (4.1) angeordnet bleibt und der erste magnetisch wirksame Körper (6. b 1) in Abhängigkeit eines größer werdenden Winkels des drehbaren Bauteils über die auf das erste Auf-Zu-Ventil (4.1) folgenden Auf-Zu-Ventile (4.2 bis 4.5) geführt wird und wobei eine Mehrzahl N von Auf-Zu-Ventilen (4.1 bis 4.5) vorgesehen ist, wobei jedes Auf-Zu-Ventil (4) einen bewegbaren Absperrkörper (7) aufweist, der bei geschlossenem Auf-Zu-Ventil (4) an einem Ventilsitz anliegt und dadurch eine Öffnung (8) in den Ventilsitz verschließt und wobei die Öffnungen (8) unterschiedliche Durchmesser aufweisen.

2. Gasventileinheit nach Anspruch 1, **dadurch gekennzeichnet, dass** der zweite magnetisch wirksame Körper (6.2) in Zusammenwirken mit dem ersten Auf-Zu-Ventil (4.1) zur Bereitstellung einer Grundlast des Gasvolumenstroms eingerichtet ist und der erste magnetisch wirksame Körper (6.1) in Zusammenwirken mit den weiteren Auf-Zu-Ventilen (4.2 bis 4.5) zur Bereitstellung einer jeweiligen Zusatzlast des Gasvolumenstroms eingerichtet ist.

3. Gasventileinheit nach Anspruch 1, **dadurch gekennzeichnet, dass** die zweite bis n-te Öffnung einen der Reihe nach zunehmenden Öffnungsquerschnitt aufweisen.

4. Gasventileinheit nach einem der Ansprüche 1 oder 3, **dadurch gekennzeichnet, dass** die Ventilsitze der Auf-Zu-Ventile (4) von einem gemeinsamen Bauteil gebildet sind, welches vorzugsweise von einer Ventildichtplatte (9) gebildet ist.

5. Gasventileinheit nach einem der Ansprüche 1 oder 3, 4, **dadurch gekennzeichnet, dass** jedes Auf-Zu-Ventil (4) eine Feder (10) aufweist, die bei geschlossenem Auf-Zu-Ventil (4) den Absperrkörper (7) auf den Ventilsitz drückt.

6. Gasventileinheit nach einem der Ansprüche 1 oder 3, 4, **dadurch gekennzeichnet, dass** die beiden magnetisch wirksamen Körper von Permanentmagneten gebildet sind und zum Öffnen des Auf-Zu-Ventils (4) der Absperrkörper (7) mittels der Kraft des über dem Auf-Zu-Ventil angeordneten Permanentmagnets (6) entgegen der Kraft der Feder von dem Ventilsitz abhebbar ist.

7. Gasventileinheit nach einem der Ansprüche 1 oder 3 bis 6, **dadurch gekennzeichnet, dass** die Absperrkörper (7) der einzelnen Auf-Zu-Ventile (4) auf einer Kreisbahn um eine Achse der Gasventileinheit angeordnet sind und die Absperrkörper (7) parallel zu dieser Achse bewegbar sind, wobei die Achse vorzugsweise von einer Schaltwelle der Gasventileinheit gebildet ist.

8. Gasarmatur mit zumindest einer Gasventileinheit nach einem der Ansprüche 1 bis 7.

9. Gasgerät, welches eine Gasarmatur nach Anspruch 8 aufweist.

## Claims

1. Gas valve unit for setting a gas volumetric flow supplied to a gas burner of a gas appliance, in particular a gas cooking appliance, wherein the gas valve unit has at least two on/off valves (4) and two magnetically active bodies, wherein the at least two on/off valves (4) can be actuated by moving the two magnetically active bodies relative to the on/off valves (4), wherein the magnetically active bodies and the on/off valves (4) are embodied such that as a function of the positions of the magnetically active bodies either no on/off valve (4) or exactly one on/off valve (4) or exactly two on/off valves (4) are opened, wherein the two magnetically active bodies (6) are disposed as a function of an angle of a rotatable component above the on/off valves (4) disposed in series, wherein a first magnetically active body (6) is disposed in the case of a first angle of the rotatable component above the first on/off valve (4.1) of the series of on/off valves (4.1 to 4.5) and wherein a second magnetically active body (6.2) remains disposed above the first on/off valve (4.1) as from a second angle which is larger than the first angle and the first magnetically active body (6. b 1) is guided as a function of an increasingly large angle of the rotatable component above the on/off valves (4.2 to 4.5) following the first on/off valve (4.1), and wherein a plurality N of on/off valves (4.1. to 4.5) is provided, wherein each on/off valve (4) has a moveable shut-off element (7) which when an on/off valve (4) is closed bears against a valve seat and thereby closes an opening (8) into the valve seat, and wherein the openings (8) have different diameters.

2. Gas valve unit according to claim 1, **characterised in that** the second magnetically active body (6.2) is arranged to provide a basic load of the gas volume flow in interaction with the first on/off valve (4.1) and the first magnetically active body (6.1) is arranged to provide a respective additional load of the gas volume flow in interaction with the further on/off valves (4.2 to 4.5).

3. Gas valve unit according to claim 1, **characterised in that** the second to n-th opening has a successively increasing opening cross-section.

4. Gas valve unit according to one of claims 1 or 3, **characterised in that** the valve seats of the on-off valves (4) are formed by a common component, which is preferably formed from a valve sealing plate (9).

5. Gas valve unit according to one of claims 1 or 3, 4, **characterised in that** each on/off valve (4) has a spring (10) which presses the shut-off element (7) onto the valve seat when the on/off valve (4) is closed.

6. Gas valve unit according to one of claims 1 or 3, 4, **characterised in that** the two magnetically active bodies are formed by permanent magnets and to open the on/off valve (4) the shut-off element (7) can be lifted off the valve seat by the force of the permanent magnet (6) disposed above the on/off valve, against the force of the spring.

7. Gas valve unit according to one of claims 1 or 3 to 6, **characterised in that** the shut-off elements (7) of the individual on-off valves (4) are disposed on a circular path about an axis of the gas valve unit and the shut-off elements (7) can be moved parallel to said axis, wherein the axis is preferably formed by an actuating shaft of the gas valve unit.

8. Gas fitting having at least one gas valve unit according to one of claims 1 to 7.

9. Gas appliance which has a gas fitting according to claim 8.

## Revendications

1. Unité de vannes à gaz destinée au réglage d'un débit volumétrique de gaz amené à un brûleur à gaz d'un appareil à gaz, notamment d'une cuisinière à gaz, l'unité de vannes à gaz présentant au moins deux vannes tout ou rien (4) et deux corps agissant magnétiquement, les au moins deux vannes tout ou rien (4) étant actionnables par déplacement des deux corps agissant magnétiquement par rapport aux vannes tout ou rien (4), les corps agissant magnétiquement et les vannes tout ou rien (4) étant réalisés de manière à ce qu'en fonction des positions des corps agissant magnétiquement, soit aucune vanne tout ou rien (4) soit exactement une vanne tout ou rien (4) soit exactement deux vannes tout ou rien (4) soient ouvertes, les deux corps (6) agissant magnétiquement, en fonction d'un angle d'un composant rotatif, étant disposés au-dessus des vannes tout ou rien (4) disposées en série, un premier corps (6) agissant magnétiquement, dans un premier angle du composant rotatif, étant disposé au-dessus de la première vanne tout ou rien (4.1) de la série de vannes tout ou rien (4.1 à 4.5) et un deuxième corps (6.2) agissant magnétiquement, à partir d'un deuxième angle supérieur au premier angle, restant disposé au-dessus de la première vanne tout ou rien (4.1) et le premier corps (6. b 1) agissant magnétiquement, en fonction d'un angle croissant du composant rotatif, étant guidé au-dessus des vannes tout ou rien (4.2 à 4.5) suivant la première vanne tout ou rien (4.1) et une pluralité N de vannes tout ou rien (4.1 à 4.5) étant ménagées, chaque vanne tout ou rien (4) présentant un corps de fermeture déplaçable (7) qui, lorsque la vanne tout ou rien (4) est fermée, est adjacent à un siège de vanne et obture ainsi une ouverture (8) dans le siège de vanne, et les ouvertures (8) présentant différents diamètres.

2. Unité de vannes à gaz selon la revendication 1, **caractérisée en ce que** le deuxième corps (6.2) agissant magnétiquement est agencé, en coopérant avec la première vanne tout ou rien (4.1), pour fournir une charge de base du débit volumétrique de gaz et **en ce que** le premier corps (6.1) agissant magnétiquement est agencé, en coopérant avec les autres vannes tout ou rien (4.2 à 4.5), pour fournir une charge supplémentaire respective du débit volumétrique de gaz.

3. Unité de vannes à gaz selon la revendication 1, **caractérisée en ce que** la deuxième jusqu'à la n-ième ouvertures présentent une section d'ouverture augmentant l'une après l'autre.

4. Unité de vannes à gaz selon l'une quelconque des revendications 1 ou 3, **caractérisée en ce que** les sièges de vannes des vannes tout ou rien (4) sont formés par un composant commun, lequel est formé de préférence par une plaque d'étanchéité de vanne (9).

5. Unité de vannes à gaz selon l'une quelconque des revendications 1 ou 3, 4, **caractérisée en ce que** chaque vanne tout ou rien (4) présente un ressort (10) qui, lorsque la vanne tout ou rien (4) est fermée, presse le corps de fermeture (7) sur le siège de vanne.

6. Unité de vannes à gaz selon l'une quelconque des revendications 1 ou 3, 4, **caractérisée en ce que** les deux corps agissant magnétiquement sont formés par des aimants permanents et **en ce que** pour ouvrir la vanne tout ou rien (4), le corps de fermeture (7) peut être soulevé du siège de vanne à l'opposé de la force du ressort au moyen de la force de l'aimant permanent (6) disposé au-dessus de la vanne tout ou rien.

7. Unité de vannes à gaz selon l'une quelconque des revendications 1 ou 3 à 6, **caractérisée en ce que** les corps de fermeture (7) de chacune des vannes tout ou rien (4) sont disposés sur une orbite circulaire autour d'un axe de l'unité de vannes à gaz et **en ce que** les corps de fermeture (7) sont déplaçables parallèlement à cet axe, l'axe étant formé de préférence par un arbre de commande de l'unité de vannes à gaz.

8. Robinetterie de gaz comprenant au moins une unité de vannes à gaz selon l'une quelconque des revendications 1 à 7.

9. Appareil à gaz présentant une robinetterie de gaz selon la revendication 8.
